# EUROPEAN PATENT APPLICATION

(11) **EP 0 826 817 A1**
(43) Date of publication of application: **04.03.1998**
(21) Application number: 97202697.5
(22) Date of filing: 02.09.1997
(51) Int. Cl.: D06N 3/00, F16L 55/16, F16L 55/165, C09K 3/10

(54) **Bandlike coating for sealingly coating constructions, applications thereof, method for coating constructions, as well as coated constructions**

(30) Priority: 02.09.1996 NL 1003943
(71) Applicant: FRANS NOOREN B.V., NL-9503 JB Stadskanaal (NL)
(72) Inventor: Nooren, Fransiscus Petrus Marie, 9503 JB Stadskanaal (NL); Smit, Jacob Pieter, 3062 XP Rotterdam (NL)
(74) Representative: de Bruijn, Leendert C.

(57) **Abstract**

The invention relates to a band-like covering for the sealed covering of structures. The covering comprises a base and a kneadable material, such as a paste. The kneadable material has a consistency and viscosity which permits deformation and retains its dimensional stability after deformation. The base comprises at least one net-like layer having screen openings which can receive the kneadable material. The net-like layer has a structure which is such that it permits deformation in two orthogonal directions situated in the plane of the layer. The net-like layer may be a woven, knitted or spool-knitted structure which can be produced from open loops. The kneadable material may be a product comprising a nonpolar, non-curing liquid polymer having a glass transition temperature of less than -20°C, in which the polymer has a surface tension of less than 40 mN/m above the glass transition temperature. The invention furthermore relates to applications of the covering, a method for covering structures and also structures covered according to the method or with a covering according to the invention.

## Description

The present invention relates to a band-like covering for the sealed covering of structures, comprising a base and a kneadable material.

Such a band-like covering material is known. Thus, it is possible to think, inter alia, of a so-called "grease strip" which is intended for wrapping underground pipelines, in particular gas lines. Such a grease strip is composed of a jute base to which a greasy substance is applied. If such a grease strip is applied to a pipeline, the external surface of said pipeline is protected, with the result that, inter alia, corrosion and other chemical action on the pipeline is counteracted. An important disadvantage of such a grease strip is that the base is not very flexible and that the grease applied is essentially on the base. If the grease strip is wound tightly around a pipeline, the grease will be partially forced away as a consequence of the pressure, as a result of which the screening effect of such a grease strip is reduced. On the other hand, it is difficult or even impossible as a consequence of the inflexible nature of the base used in that case to obtain a flatly fitting seal with good sealing action at the position of joints between different surfaces, such as those which occur at the welding seam of a welded-on branch in a pipeline system.

The object of the present invention is to provide an improved band-like covering for the sealed covering of structures, which band-like covering overcomes, inter alia, the abovementioned disadvantages.

This object is achieved according to the invention by providing a band-like covering for the sealed covering of structures or parts thereof, comprising a base and a kneadable material such as a paste, having a consistency and viscosity which permits deformation and retains its dimensional stability after deformation, wherein the base comprises at least one net-like layer having screen openings which can receive the kneadable material and wherein the net-like layer has a structure which is such that it permits deformation in two orthogonal directions situated in the plane of the layer.

The net-like, or if preferred, grid-like or screen-like, layer having screen openings makes possible reception of the kneadable material in the screen openings, thereby preventing the kneadable material from largely being forced out as a result of the pressure acting between the covering and the structure as a consequence of pressing the covering onto an underlying structure or tightly winding the covering around a structure. In the case of the covering according to the invention, the kneadable material will remain present in the screen openings. A large shape adaptation capability is obtained because the net-like layer has a structure which is such that it permits deformation in two orthogonal directions situated in the plane of the layer. As a result, in the case of a pipeline system, it is readily possible to cover well and reliably the welding seam with which a branch has been welded on in a T-piece. Such a structure is obtained, for example, by using a so-called expanded metal or plastic gauze. Such an expanded gauze may be composed, for example, of a grid having lozenge-shaped screen openings whose oppositely situated diagonals joining the apices are oriented in the longitudinal and transverse directions, respectively, of the band. With a suitable choice of the kneadable material, a structure or portion thereof can be wrapped in a band-like covering according to the invention in a gastight and liquid-tight manner. External chemical action on the structure is then effectively prevented.

According to a further advantageous embodiment of the invention, the net-like layer has a loop-like structure of a multiplicity of interlocking loops. Such a loop-like structure permits deformation in orthogonal directions with respect to the loop, while the kneadable material can be received in the loops.

The net-like layer is advantageously obtained, according to the invention, by using a knitted material or tricot, in which connection it is pointed out that both weft tricot and warp tricot can be used. The net-like layer then has a knitted or spool-knitted structure of interlocking stitches or loops. For such knitted materials, which are known per se from the prior art, it is known that they permit deformation in orthogonal directions situated in the plane of the knitted material. The screen openings are then openings left free by the threads used for the knitted material. The kneadable material can easily be received in said openings.

According to the invention, the net-like layer can advantageously be manufactured from a suitable plastic, such as polyethylene or polypropylene. Threads of polypropylene can readily be processed on knitting equipment to form a knitted material suitable as a base for the covering according to the invention. However, threads of metal, such as, for example, stainless-steel, can also be processed well on knitting equipment to form a knitted material suitable for the covering according to the invention.

In order, on the one hand, to ensure the shape adaptation capability in orthogonal directions of the layer and, on the other hand, to provide an adequate thickness of the net-like layer for receiving kneadable material, it is advantageous according to the invention if the net-like layer is manufactured from a thread or threads which is/are flat in cross-sectional shape and whose so-called long flat sides are essentially situated transversely to the plane of the layer. The cross-sectional dimensions of the thread may in that case be, for example, 1 mm for the long rectangular side and 0.1 mm for the short rectangular side. These dimensions are, however, in no way intended to be restrictive, but rather to explain the concept "flat thread" in greater detail. Cross-sectional dimensions of, for example, 1 x 0.2 or 1 x 0.3 mm or 1.5 to 3 x 0.1 to 0.3 mm are also quite conceivable.

In order to ensure a fairly ready reception of kneadable material in the net-like layer, it is advantageous, according to the invention, if the screen openings have a cross section of at least approximately 2 to 3 mm, for example approximately 5 or 8 or 10 mm. In this connection, the screen openings may have a round shape or approximately round shape, but this is in no way a requirement.

According to an advantageous embodiment, the base comprises a stocking which, in the flat state, provides two net-like layers. In this connection, a stocking is understood as meaning a more or less tubular body whose tube wall has a net-like structure and which tube wall is flexible enough for the tube to be capable of being pressed so as to form two net-like layers lying on top of one another. Such a stocking can easily be manufactured from many kinds of materials, such as plastics or metals, using known knitting equipment. As a result of constructing the base of two or more net-like layers, the thickness of the covering can be increased as required and may retain a fairly large thickness of kneadable material in the covering even under pressure. It will be clear that, to provide two or more net-like layers, a stocking is not necessary per se, but that two or more separate band-like layers of base material can be laid on top of one another.

The covering according to the invention can be manufactured in many ways. It is, for example, conceivable to press the base material by means of rollers into a layer of kneadable material passed between the rollers.

Many types of material can be used as kneadable material according to the invention, depending on the specific use application of the covering. Thus, in relation to the kneadable material it is possible to think, for example, of rubber-like materials, bituminous materials, a polysulphide, silicones or polysiloxanes, polyurethanes, polybutenes, vaseline-like materials, synthetic and natural fatty acids, epoxides and polyesters. As is known to the person skilled in the art, such materials can be made available in kneadable, paste-like condition. In this connection, the materials can be cured after application of the covering or remain kneadable, depending on the use and the requirement to be imposed.

According to the invention, the kneadable material may comprise a liquid polymer which is nonpolar and does not cure. Suitable polymers are preferably viscous and/or pasty at room temperature. Suitable polymers are, for example, petroleum products such as tar-like, bituminous-like, vaseline-like and rubber-like materials. Examples are bitumen, vaseline, polybutadiene and polyisopropene. Other suitable liquid polymers are those which have a glass transition temperature of less than 20°C and have a surface tension of less than 40 mN/m above the glass transition temperature. Such polymers are preferably chosen from the group comprising polyalkenes unhydrogenated or partially hydrogenated polyalkadienes, unhydrogenated or partially hydrogenated copolymers of alkenes and alkadienes, polysiloxanes, polysulphides, polyalkoxylene glycols, polyalcohols or mixtures thereof. Examples of such polymers are polyisopropene, poly(1-butylene), poly(1-pentylene), poly(1-ethyl-1-butylene), poly(1-butyl-1-butylene), poly(1-heptyl-1-butylene), polyisobutene, poly(oxydimethylsilylene), poly(oxymethylphenylsilylene) and aliphatic polysulphides which may comprise diethylformal sulphide units.

For insulation sealing and covering purposes, in particular for the liquid-tight and/or gastight insulation and sealing of underground structures or parts thereof which are in contact with moisture or water, for example underground steel manhole covers, underground tanks, lines, pipes, tubes and also cable couplings, a product such as that described in European Patent Application 96201796 by the Applicant can be advantageously used as kneadable material. Such manhole covers, underground tanks, lines, tubes etc. are generally manufactured from metal and therefore have the tendency to corrode. Said corrosion is undesirable since it weakens the metal. Various techniques and products are known for counteracting corrosion formation in the case of such structures. Pipes of underground tanks, such as, for example, LPG tanks, are protected against corrosion by a so-called cathodic protection. In this case, a low voltage is applied to the tank or the lines, resulting in electrochemical reactions which counteract corrosion formation. So-called manhole covers are generally sealed with the aid of bitumen or synthetic, thermally curing resins. Such products are applied to the structures to be covered in the plastic state with the aid of, for example, a trowel, palette knife or other tool. This is a time-consuming activity and it is furthermore not inconceivable that not all the parts of the structure are well covered and protected. If the covered or protected structure has to be inspected, such products are, in addition, found to be difficult to remove. In addition, curing products have the disadvantage that crack formation may occur under the influence of mechanical loads so that the underlying structure is nevertheless exposed to external influences.

The product as described in European Patent Application 96201796 by the Applicant has the advantage that it is a liquid product which has a better settlement on the structure to be sealed or to be isolated, as well as better deformability and very good adhesion, that is to say good adhesive strength, to the surface. Said product is kneadable and easy to apply and, because it does not cure, can easily be removed again. Said product can very readily be used as kneadable material in combination with a base composed of at least one net-like layer having screen openings in order to form a band-like covering according to the invention together with said base. Such a band-like covering can easily be applied and, if necessary, also easily be removed again by peeling from the applied band-like covering parts as a consequence of the fact that the kneadable material does not cure and remains kneadable. In addition, because the kneadable material remains kneadable, a good, permanent seal is ensured, even in the case of mechanical loads. The product disclosed in European Patent Application 96201796 by the Applicant can easily and very accurately be applied as band-like covering having a base as a consequence of the capability of the base to receive kneadable material and the deformability of the base. According to a very advantageous embodiment of the invention, the kneadable material is therefore also a product comprising a nonpolar, non-curing liquid polymer having a glass transition temperature of less than -20°C, preferably less than -60°C, the polymer having a surface tension of less than 40 mN/m above the glass transition temperature.

Polymers having a glass transition temperature of less than - 20°C have the advantage that, if they are used in the products for coverings according to the invention, they have a good deformability within the temperature range in which the coverings are used and remain soft because the polymers are in the rubber-like state. Polymers which have a surface tension of less than 40 mN/m at 20°C have the advantage that, if they are used in the coverings according to the invention, a good adhesion to the surface to be sealed, insulated or protected is obtained. Such polymers, which are suitable for use in the products according to the invention comprise nonpolar, non-curing liquid polymers. Such polymers are known in the prior art, for example polyalkanedienes, polyalkenes and polysiloxanes.

It is advantageous to use products which comprise nonpolar, non-curing liquid polymers which have a glass transition temperature of less than -60°C and a surface tension of less than 40 mN/m at 20°C. Such polymers are also known in the prior art and comprise, for example, polyalkanedienes, polyalkenes and polysiloxanes. Examples of suitable polyalkanedienes are polyisopropene, poly(1-butylene), poly(1-pentylene), poly(1-ethyl-1-butylene), poly(1-butyl-1-butylene) and poly(1-heptyl-1-butylene). An example of a suitable polyalkene is polyisobutene. Examples of suitable polysiloxanes are poly(oxydimethylsilylene) (= polydimethylsiloxane) and poly(oxymethylphenylsilylene). Preferably, polyisobutene and poly(oxydimethylsilylene) are used. According to the invention, therefore, a product is preferably used which comprises nonpolar, non-curing liquid polymers, the polymers having a glass transition temperature of less than -60°C.

The molecular weight of suitable polymers may vary over a wide range. The molecular weight of, for example, suitable polyalkenes may be, for example, 500 to 100,000. Suitable polyalkenes have a viscosity at 100°C of approximately 10 to 50,000 cSt. The density of suitable polyalkenes is approximately between 0.75 and 1.10, preferably approximately between 0.85 and 0.95, the bromine number (g Br₂/100 g) is approximately between 0.1 and 50, the acid number (mg KOH/g) is approximately between 0.01 and 0.05 and the electrical resistivity at 100°C is preferably higher than 10¹² Ω^{.}cm.

Suitable polysiloxanes (polyoxysilylenes) are, for example, those which have, at 25°C, a density of approximately 0.75 and 1.10, preferably 0.90 to 1.00, a surface tension of less than 35, preferably of less than 25 mN/m, an acid number of approximately 0.01 mg KOH/g and an electrical resistivity according to the standard DIN 53 482 higher than 10¹² Ω^{.}cm.

According to the present invention, polymers are advantageously used which comprise polyisobutene and/or poly(oxydimethylsilylene) which have a viscosity between 60,000 and 1,200,000 cSt (60 to 1200 Pa·s) at 20°C.

The covering according to the invention is resistant to many chemical substances. Thus, the covering is resistant to water-containing solutions of inorganic and organic substances such as salts, acids and bases, for example solutions of hydrochloric acid, sulphuric acid, phosphoric acid, chlorosulphonic acid, potassium hydroxide, sodium hydroxide, potassium bichromate, acetic acid, organic solvents, for example petroleum, and corrosive gases, such as ammonia.

The product for the covering according to the invention may also contain stabilizing agents, for example agents providing protection against oxidation under the influence of heat, such as 2,6-di-tert-butyl-4-methylphenol and agents for protection against the effect of ultraviolet light.

The product according to the invention can comprise one or more fillers. Said fillers may be of an organic or inorganic nature. Examples of organic fillers are polyvinyl chloride, polyethylene, polypropylene, polyisoprene and rubber. Examples of inorganic fillers are inorganic minerals, salts and oxides, for example chalk, boron sulphate, aluminium oxide, silicon dioxide, quartz powder, glass, talc, slate, bentonite and the like. Preferably, use is made of a mixture of coarse and fine particles of one or more fillers in a certain quantitative ratio. The rheological properties of the product according to the invention can be regulated by means of the amount of filler. According to the invention, it is therefore preferable that the fillers comprise one or more fractions, each fraction having a different particle size and a different particle-size distribution. In particular, the fillers comprise at least one fraction having a particle size of 0.1 µm to 1500 µm.

The fillers may be swellable or non-swellable, that is to say they increase considerably or to a small extent in volume as a result of absorption of water. An example of a swellable filler is bentonite. The product according to the invention may therefore comprise one or more polymers having a low molecular weight and/or a high molecular weight and one or more non-swellable and/or swellable fillers.

The fillers may have a low or a high density. The density of the fillers may be between approximately 0.1 and 5 kg/dm³. Examples of a filler having a low density, for example between approximately 0.3 and 0.1, are so-called "hollow spheres", which are manufactured, for example, from glass, polyvinylidene chloride and syndiotactic foams, and cork. Examples of fillers having a high density, for example a density between 2 and 4 kg/dm³, are inorganic fillers, such as talc and chalk.

The product according to the invention may also comprise one or more products which are obtained directly or indirectly from petroleum. Examples of such products are bituminous products, paraffin-like products, for example vaseline and wax.

The product according to the invention is deformable, even long after it has been applied. Because the product is deformable and remains deformable and it has a paste-like to rubber-like appearance, the covering is therefore capable of absorbing vibrations and shocks. Thus, in addition to the sealing action, the covering also provides protection against mechanical influences, such as vibrations, as a result of which damage to the object to be sealed will occur less rapidly. The product is not sensitive to low temperatures, such as those which may occur during the winter period. In contrast to bitumen, the product does not change shape under the influence of temperature. In addition, the product is not hazardous to the user, that is to say it is not poisonous and does not give off poisonous substances, and it is not irritating to the skin and the eyes. The product does not contain any substances which are harmful to the environment. The product and therefore also the covering in which it is incorporated adheres to any type of surface, for example surfaces comprising metal, such as steel, concrete, brick, glass, synthetic materials, such as plastics, and the like. Said surfaces may be dry or moist.

The covering according to the invention is preferably used at a temperature of not more than 50°C and not less than -10°C. For other uses, the product can be used at a temperature of -30°C to 150°C. The covering according to the invention is suitable, in particular for the gastight and/or liquid-tight sealing of cable couplings, underground lines and pipes, and also tanks and manhole covers, it being possible to comply with the standard NEN 2768. This is the case, in particular, if a product in accordance with European Patent Application 96201796 is used as kneadable material.

The covering according to the invention is also suitable for providing protection against mechanical external influences, such as vibrations and shocks. In particular, the covering according to the invention can be used for damping sound vibrations having a frequency of 25 to 25,000 Hz. The covering according to the invention can therefore advantageously be used to insulate, for example, machines, buildings, loudspeaker cabinets and the like.

As a result of its great deformability, the covering according to the invention is also very suitable, in particular, as anticorrosion agent for welding seams and connecting pieces of both underground and overground pipelines and gas lines, flanges, crane hooks, thermit welds in the case of separable shafts below ground level, and branches, such as T-pieces and Y-pieces.

The covering according to the invention can furthermore advantageously be used for protecting sensitive electronic equipment, for example electronic measuring and control equipment and electronic equipment for sound recording and sound reproduction, against moisture, dust and gases, for example corrosive gases.

The covering according to the invention can also be used to insulate aboveground and/or underground components which are used in electricity-producing and electricity-consuming industries, for example low-voltage and high-voltage cables and connecting pieces, and for protecting them against moisture and gases, for example corrosive gases.

The band-like covering can be provided in mat form, in tape form or in another sheet form. At the same time, the base may be made of, for example, butyl rubber, polyurethane, polysulphide, polyvinyl chloride, polyethylene and the like, but can also be made of a metal. The width of the band-like covering may vary, for example, from 2 cm to 2 m or even more. The band-like covering according to the invention is also suitable for use as roof covering and as a replacement for textile materials, such as those used in the automobile industry.

The covering according to the invention can also be used in shipbuilding for covering very large surfaces. In this connection, the band-like covering can be made available in the form of mats which may have a width of up to 4 m or more and a length of up to 4 or more metres. Inter alia, the inside of the ship's hull can be very well covered using such mats. However, the covering according to the invention can also be used in the off-shore industry, for example for protecting supporting pillars of drilling platforms, steel parts and tubes situated under seawater. In this connection, it should be noted, in particular, that the covering according to the invention can be applied to structures even under water if the product disclosed in European Patent Application 96201796 is used.

As regards the suitability of the product disclosed in European Patent Application 96201796 as kneadable material for the covering according to the invention, reference is made, in particular, to Examples I to VI, inclusive, which are described in European Patent Application 96201796 and are incorporated by reference in this application.

The covering according to the invention is advantageously made available in a form which is rolled up to form a roll. Such a roll can readily be transported, can be unrolled during application of the covering to the respective structure and, as a consequence of the ability to be unrolled, is very easy to use when the covering is applied to the respective structure.

In order to protect the covering against contamination prior to the application to a structure, it is advantageous, according to the invention, if the band is provided on either side with a protective film which can be removed when the covering is applied. Such a removable protective film also counteracts mutual adhesion of parts of the band-like covering, which is advantageous, in particular, if the covering is made available in roll form. In this last case, it is possible in fact to manage with one band-like protective film which is applied to one side of the covering and then concomitantly rolled up to form the roll and, in the rolled-up state of the whole covering, it then provides protective film on either side of the covering as a consequence of being concomitantly rolled up.

The invention also relates, in particular, to a method for covering, in particular, underground structures, and to be precise, in particular tubes, such as gas tubes, a band-like covering according to the invention being applied to the structure or a part thereof.

In this connection, tubes and lines can be advantageously covered according to the invention if the band-like covering is wound helically, in one or more layers, around the tube or line to be covered. In this case, adjacent windings of one layer may possibly overlap one another partially, with the result that a good mutual connection of adjacent windings is ensured.

The present invention furthermore relates to a method wherein the structure comprises a part attached at a joining seam to a pipeline and projecting from the pipeline, wherein the joining seam, in particular a weld, is covered with a band of the band-like covering by applying said band, when viewed in its width direction, to the structure as an overlapping bandage to the joining seam, the zones of the pipeline adjacent to either side thereof and the projecting part and forming a fold-like joint in the band at the position of the joining seam and pressing on the portion of the band applied to the structure. As a consequence of the great shape adaptation capability of the base and as a consequence of the capability of the base to receive kneadable material, it is possible to obtain a close contact with the underlying joining seam and adjacent zones using the covering according to the invention even at such positions which can be reached with relative difficulty using mats and tapes. In this connection, after the band-like covering has been applied to the joining seam one of the adjoining zones or both of the adjoining zones covered with the band can be covered with further covering if the pipeline and/or the projecting part is itself covered. Preferably, the joining seam itself and the zones directly adjacent thereto will generally be covered first with one band of covering material and only then will the surfaces, adjacent thereto, of the projecting parts and/or the pipeline be covered.

In particular, if the covering according to the invention comprises a material which remains kneadable, that is to say is non-curing, it is advantageous according to the invention if the portions of the structure covered with the covering according to the invention are then wrapped with a protective tape. Such a tape can be wound tightly around the covering according to the invention because the base present in the covering guarantees a certain minimum space in which kneadable material remains present. The kneadable material can therefore not be completely pressed aside as a consequence of the pressure exerted by the tape. Such a tape essentially has the purpose of protecting the covering according to the invention to some extent mechanically against external influences.

The invention also relates to a method for inspecting a structure covered with covering according to the invention or a covered structural part, wherein said covering is removed from the structure or the structural part by peeling off the covering bands, wherein the exposed structure or exposed structural part is then inspected for, for example, crack formation, chemical action etc., and wherein, after inspection, the structure stripped of covering or the structural part stripped of covering is re-covered with covering according to the invention, it being possible optionally to use the previously removed covering or new covering material for this re-covering.

The present invention will be explained in greater detail below by way of example with reference to the drawing. In the drawing:
Figure 1 shows a diagrammatic, perspective view of a base for use in the covering according to the invention;
Figure 2 shows a diagrammatic cross-sectional view of a portion of a band-like covering according to the invention;
Figure 3 shows a diagrammatic, perspective view of a pipeline having a branch, the covering according to the invention applied to the branching point being shown partly cut away; and
Figure 4 shows a diagrammatic, perspective view of a pipeline having a branch according to Figure 2, the application of the covering according to the invention over the joining seam, in this case a welding seam, being illustrated in greater detail.

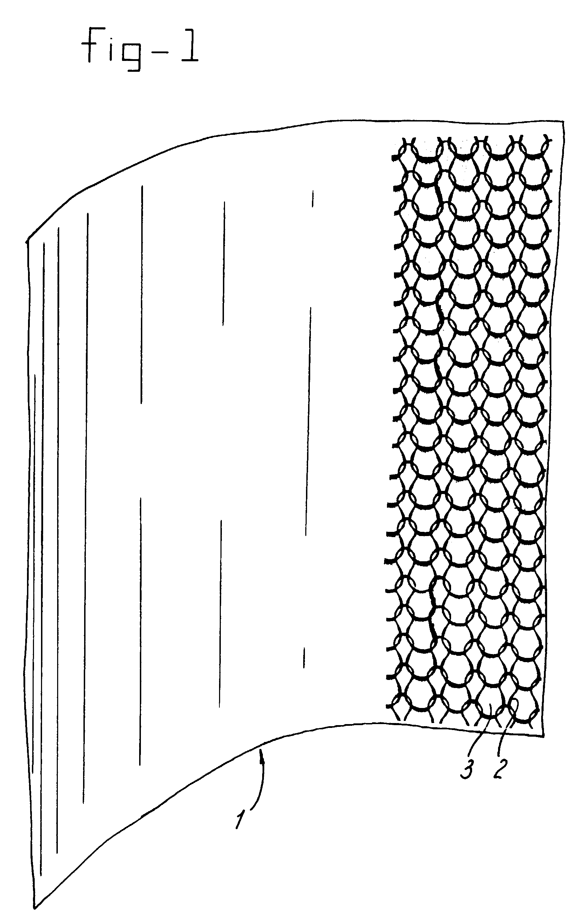

Figure 1 shows, in perspective view, a portion of a layer of band-like base material. As is visible in Figure 1, said base material 1 is composed of a knitted material or weft tricot having interlocking loops 2. In this structure, the loops enclose screen openings 3 in which kneadable material can be received. A knitted material such as is shown in Figure 1 can be produced by many procedures known from the prior art. The necessary variants, which all have, however, a loop-like structure, of such knitted materials are also known. As shown in Figure 1, the loops 2 have an essentially round shape. More oval shapes are, however, also very readily conceivable. For certain types of base, such as so-called expanded gauze, lozenge-shapes, also called Wybert patterns, are also conceivable.

As shown in Figure 1, the loop structure is composed of alternating vertical rows of larger and smaller loops. In this structure, the larger loops have a diameter of approximately 5 to 7 mm and the smaller loops have a diameter of approximately 2 to 4 mm. The loops of adjacent rows may, however, also be equally large.

As a consequence of the structure of interlocking loops, such knitted materials have a great shape adaptation capability. Such loops permit the knitted material or portions thereof to be slid into one another so that they all lie more closely together and fold formation is prevented. However, the stretching of the knitted material or portions of the knitted material is also very readily possible as a consequence of the structure of interhooking loops. Said shape adaptation capability is at the same time present in virtually every direction of the knitted material in the plane thereof. It will furthermore be clear that such a knitted material can easily be laid around a curved or angular surface, that is to say the knitted material also has a shape adaptation capability in directions which intersect the surface of the knitted material when it is in the flat state.

The properties described above in relation to the shape adaptation capability of such knitted materials or structures made up of interhooking loops makes them very suitable as base for a covering material which has to be applied to surfaces having irregular shapes. Such a base material permits a relatively close contact of the base with the underlying, irregularly extending surface at all times.

As a consequence of the abovementioned properties, such a structure according to the invention has proved particularly suitable as base material for kneadable materials with which structures can be covered to seal them off from the environment, for example, in a liquid-tight and/or gastight manner. The kneadable material can in fact be received between the screen openings 3 and on the base layer. Such a band-like covering material can be produced by, for example, smearing a kneadable material onto a base such as that shown in Figure 1 or by pressing such a carrier into a band of kneadable material, for example, using a group of rolls or rollers.

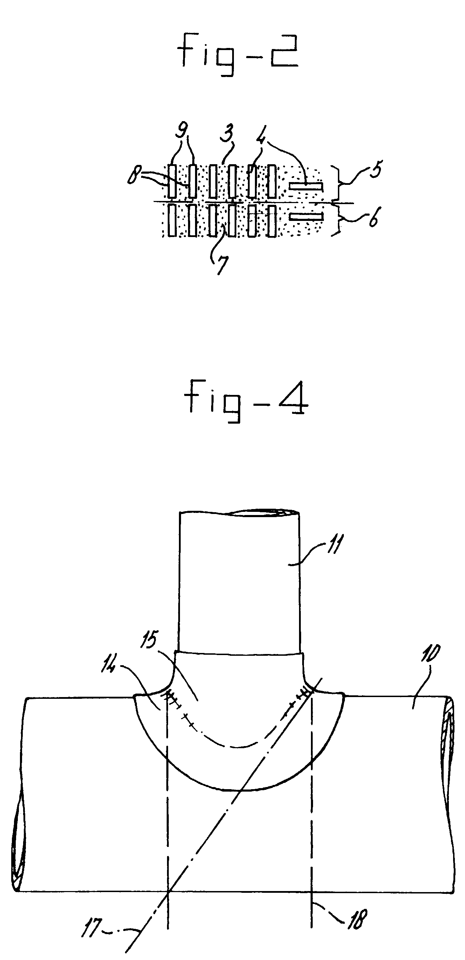

A base such as that shown in Figure 1 can be manufactured as a stocking, in particular, very well on knitting equipment. As a result of pressing said stocking flat, there are then produced, as it were, two layers of base material, as indicated diagrammatically in Figure 2 by the reference numerals 5 and 6. In this connection, Figure 2 shows a diagrammatic cross-sectional view of an edge region of a stocking which has been pressed flat, kneadable material 7 (shown by dots) being situated in the screen openings 3.

As can furthermore be seen in Figure 2, the thread 4 from which the knitted material has been formed has an essentially rectangular cross-sectional shape. Such a thread is referred to as a so-called flat thread. Such a flat thread 4 has a so-called long side 8 and a so-called short side 9. In this connection, the short side 9 extends, as it were, radially with respect to the loop shape, while the long side extends, as it were, tangentially with respect to the loop shape. On the one hand, this orientation of the flat wire 4 makes loop formation relatively easily possible, while, on the other hand, the long side 8 brings about a certain spacing, for example 1 mm, between the top of the base layer and the bottom of the base layer. This ensures that sufficient kneadable material is present in the screen passages 3 (or between the loops 2) and that said kneadable material remains present in the screen openings 3 even when pressure is exerted on the entire band-like covering and is not forced away to the side. A good covering and sealing action is ensured in this way.

Figure 3 shows a diagrammatic, perspective view, partly cut away, of a branch or T-bifurcation wrapped with a band-like covering according to the invention. The partially wrapped structure is in this case composed of a main line 10 and a part 11 projecting therefrom, in this case a branch, and a part 12, in this case an assembly flange, projecting from the branch line 11.

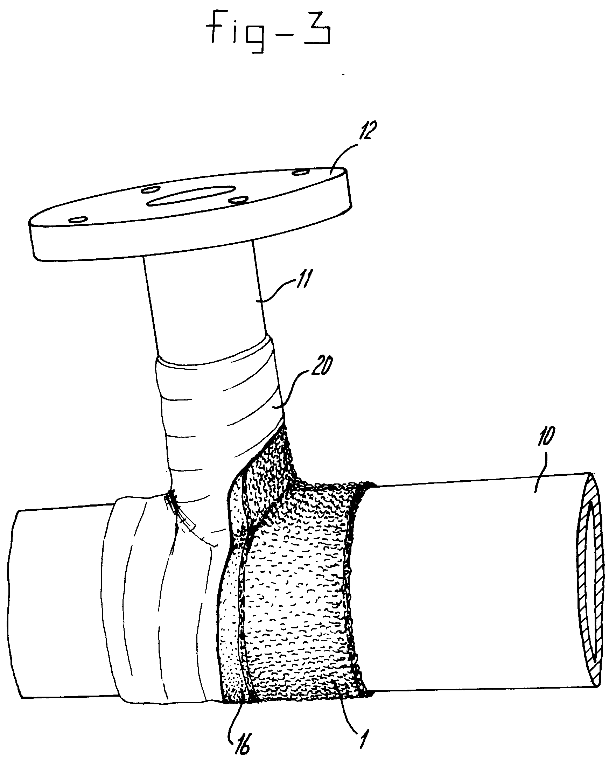

As is shown, in particular, in Figure 4, the band-like covering according to the invention can be laid in a very close-fitting manner, in principle without any fold formation or pocket formation, over the attachment seam of the branch 11 to the main line 10. Such attachment seams 13 are generally formed by weld seams which are relatively susceptible to corrosion and therefore have to be protected against corrosion. A good connection and sealing of the covering to said weld seam 13 is therefore of great importance. The band-like covering is in this case generally laid on said joining seam step-wise in a progressive manner in the direction of the branch 11 along the joining seam 13, the sealing strip simultaneously covering the joining seam 13, the zone 15, adjacent thereto, of the branch 11 and the zone 14 of the main line 10, which is also adjacent to the joining seam. After the entire joining seam, or welding seam 13, has been covered in this way with the band-like covering 16 according to the invention, a further layer of band-like covering may possibly be applied on top of it. The entire T-bifurcation can then also be wrapped in a manner known per se using the band-like covering according to the invention by wrapping, for example, the branch 11 helically and, on reaching the joining seam 13, proceeding further along a diagonal 17 and thus covering the main line 10 further with band-like covering. This can be repeated from various directions and a wrapped T-bifurcation such as is shown in Figure 3 can be obtained in this way. As shown diagrammatically by broken lines 18 in Figure 4, a portion of the zone 14 can also be covered with band-like covering material which will be able to extend further along the entire main line 10.

As furthermore is shown in Figure 3, the T-piece wrapped in band-like covering material according to the invention can finally be covered with a protective tape 20 of which many protective tapes known from the prior art are known. As already explained above, said protective tape 20 can be wound tightly to even very tightly around the already applied band-like covering as a consequence of the net-like structure of the base without the kneadable paste, which is very important for the covering and sealing action, being completely pressed aside.

## Claims

1. Band-like covering for the sealed covering of structures or parts thereof, comprising a base and a kneadable material, such as a paste, having a consistency and viscosity which permits deformation and retains its dimensional stability after deformation, wherein the base comprises at least one net-like layer having screen openings which can receive kneadable material and wherein the net-like layer has a structure which is such that it permits deformation in two orthogonal directions situated in the plane of the layer.

2. Covering according to Claim 1, wherein the net-like layer has a woven, knitted or spool-knitted structure.

3. Covering according to one of the preceding claims, wherein the net-like layer is a loop-like structure.

4. Covering according to one of the preceding claims, wherein the net-like layer is manufactured from a plastic, such as polyethylene and polypropylene.

5. Covering according to one of the preceding claims, wherein the net-like layer is manufactured from flat thread whose long flat sides are essentially situated transversely to the plane of the layer.

6. Covering according to one of the preceding claims, wherein the screen openings have a cross section of at least approximately 2 to 3 mm, for example approximately 5 or 8 or 10 mm.

7. Covering according to one of the preceding claims, wherein the base comprises a stocking which, in the flat state, provides two net-like layers.

8. Covering according to one of the preceding claims, wherein the kneadable material is a product comprising a nonpolar, non-curing liquid polymer having a glass transition temperature of less than -20°C, preferably less than -60°C, and wherein, above the glass transition temperature, the polymer has a surface tension of less than 40 mN/m.

9. Covering according to Claim 8, wherein the product comprises one or more fillers chosen from inorganic and organic fillers.

10. Covering according to Claim 9, wherein the fillers comprise one or more fractions and wherein each fraction has a different particle size and a different particle size distribution.

11. Covering according to Claim 9 or 10, wherein the fillers comprise at least a fraction having a particle size of 0.1 µm to 1500 µm.

12. Covering according to one of Claims 8 - 11, wherein the product has an infinitely high electrical resistivity and a current density of less than 10 µA/m².

13. Covering according to Claim 12, wherein the product has a current density of less than 1 µA/m².

14. Covering according to one of Claims 8 - 13, wherein the product has a current density of less than 10 µA/m² if the product is in contact with a water-containing electrolyte having an electrical resistivity of 100 Ω·m.

15. Covering according to one of Claims 8 - 14, wherein the product has a pore density which is such that a spark having a length of at least 45 mm cannot bridge a layer of the product having a thickness of 30 mm.

16. Covering according to Claim 15, wherein the product has a pore density which is such that a spark having a length of at least 45 mm cannot bridge a layer of the product having a thickness of 16.5 mm.

17. Covering according to one of Claims 9 - 16, wherein the fillers are swellable filling agents.

18. Covering according to one of the preceding claims, wherein the covering is rolled up to form a roll.

19. Covering according to one of the preceding claims, wherein the band is provided on either side with a film which can be removed when the covering is applied.

20. Use of a covering according to one of Claims 1 - 19 for sealing and/or insulating electrical and telecommunication equipment possibly including conductors, in particular cable couplings which may be situated below ground level.

21. Use of a covering according to one of Claims 1 - 19 for damping sound vibrations having a frequency of 25 Hz to 25,000 Hz.

22. Use of a covering according to one of Claims 1 - 19 for sealing flanges, crane hooks, welding seams, T-pieces and thermit welds in separable shafts below ground level.

23. Use of a covering according to one of Claims 1 - 19 for sealing objects, wherein the covering is used at a temperature of -30°C to 150°C.

24. Use of a covering according to one of Claims 1 - 19 for protecting electronic equipment.

25. Method for covering structures, in particular tubes, such as gas tubes, wherein the band-like covering according to one of Claims 1 - 19 is applied to the structure or a portion thereof.

26. Method according to Claim 25, wherein the band-like covering is wound helically, optionally partially overlapping and/or in one or more layers, around the tube to be covered.

27. Method according to one of Claims 25 - 26, wherein the structure comprises a part attached at a joining seam to a pipeline and projecting from the pipeline, wherein the joining seam is covered with a band of the band-like covering by applying said band, when viewed in its width direction, to the structure as an overlapping bandage to the joining seam, the zones of the pipeline adjacent to either side thereof and the projecting part and forming a fold in the band at the position of the attachment seam and pressing on the portion of the band applied to the structure.

28. Method according to Claim 27, wherein one of the adjoining zones or both of the adjoining zones covered with the band is/are covered with further covering partially overlapping the respective zone.

29. Method according to one of Claims 25 - 28, wherein the portion of the structure covered with the covering is wrapped with a tape.

30. Method for inspecting a structure or structural part covered with covering according to one of Claims 1 - 19, wherein said covering is removed from the structure or the structural part by peeling off the covering bands, wherein the exposed structure or the exposed structural part is then inspected for, for example, crack formation, chemical action etc., and wherein, after inspection, the structure stripped of covering or the structural part stripped of covering is re-covered with covering according to one of Claims 1 - 19, it being possible optionally to use the previously removed covering or fresh covering material for this re-covering.

31. Structure covered according to the method according to one of Claims 25 - 29.

32. Structure covered with a covering according to one of Claims 1 - 19.
